# EUROPEAN PATENT SPECIFICATION

(11) **EP 0 781 249 B1**
(45) Date of publication and mention of the grant of the patent: **23.12.1998**
(21) Application number: 95934929.1
(22) Date of filing: 10.10.1995
(51) Int. Cl.: B65G 47/74, B65G 47/90, B23Q 7/16

(54) **METHOD AND ARRANGEMENT FOR POSITIONING OF ARTICLES ON CONVEYING BELTS**
VERFAHREN UND VORRICHTUNG ZUM POSITIONIEREN VON GEGENSTÄNDEN AUF FÖRDERBÄNDERN
PROCEDE ET DISPOSITIF DE MISE EN PLACE D'ARTICLES SUR DES CONVOYEURS A BANDES

(30) Priority: 10.10.1994 SE 9403426
(43) Date of publication of application: 02.07.1997
(73) Proprietor: Johansson, Per, 241 32 Eslöv (SE)
(72) Inventor: Johansson, Per, 241 32 Eslöv (SE)
(74) Representative: Petri, Stellan
(86) International application number: SE9501163
(87) International publication number: WO9611157

(56) References cited:
- EP-A- 403 793
- EP-A- 459 272
- DE-A- 2 326 769
- US-A- 4 960 198
- US-A- 4 991 708
- US-A- 5 203 444

## Description

The present invention relates to a method and a device for positioning of pieces of material, randomly arriving on a first endless conveyor and being transferred to a second endless conveyor for performing operations thereon without interrupting the material flow on this first conveyor.

In many industrial processes pieces of material are transported on a continuously running conveyor. The pieces of material may however very well arrive irregularly but are often rather well oriented. It may, however, be troublesome to take care of these pieces for i.e. packing or manipulating them in some way, whereby it may be necessary for instance to use fast working picking apparatuses or to arrange the pieces of material in order to create rows or piles.

The problem is obvious. Fast apparatuses are often expensive and can scarecely handle heavy goods. During ranging, the pieces of material will become arranged close together, which often creates a problem.

US-A-4 960 198 describes a technical solution for providing a continuous flow of articles, groups of articles or series of articles. The mutual distances of the articles are controlled by varying the relative speeds of the conveyors. Another reference is made to US-A-4 991 708. This reference does not, however, relate to a continuous process, which is one of the prerequisites of the invention.

It is the object of the present invention to overcome the disadvantages inherent in the prior art.

The invention is characterised by the features of the independent claims.

The present invention presents a solution to the said problem accomplishing in a simple way that the pieces of material during a certain time is at rest, without in any way disturbing the flow of the pieces of material upstream the device according to the invention.

The invention is applicable when it is desired to pick pieces of material from the said second conveyor with some kind of arrangement, as well as when some kind of operation is to be performed, whereby the actual operation is dependent on selected positions and/or a certain time period when the pieces are at a rest position, without in any way disturbing the flow on the first transport means.

When said first means has left a piece of material to a second transport means, the piece of material is further transported in an unchanged direction and a suitably chosen speed, at least with the same speed as that of the first transport means, a certain distance whereafter this second transport means automatically stops and remains at a rest position until another piece of material arrives and is also taken over by said second means from the first means.

At a predetermined condition, for example when a certain filling stage has been reached, the second transport means starts to move against the transport direction with exactly the same speed as that of the first transport means. The pieces of material on this second transport means will consequently remain at a rest position irrespectively of whether new pieces of material arrive on the first transport means or not, and if the second transport means thereby has to word in order to receive these new pieces of material. The deadlock time can be chosen. The limits for the deadlock time are given by the time that the deadlock dependent operation at least requires, the combination of the length of the second means, the speeds of the transport means, the distance between the pieces of material on each of the conveyors, and the frequency with which pieces of material arrive.

During the deadlock time, planned operations are performed, for example picking, preferably with a multi-operation arrangement, or machining with some known method, whereby the pieces of material are accordingly either picked from said second transport means, or are machined and further transported downstream of the material flow where they are transferred to a third transport means.

During the return movement of said second transport means, a transport movement may, if necessary, be performed and if so, preferably which such a speed in relation to the return movement speed of the transport means, that the pieces of material may be transferred safely.

In the following description an embodiment of the invention will be described in detail with reference to the accompanying drawings, in which
FIG 1 A shows an arrangement according to the invention, intended for picking with a multihead,
FIG 1 B is a section along 1 B-1 B in FIG 1 A,
FIG 1 C is a section along 1 C-1 C in FIG 1 A,
FIG 1 D is a section along 1 D-1 D in FIG 1 A,
FIG 2 shows the arrangement when the second transport means has been filled to the limit when its frame begins to move counter to the material flow during further filling and during activation of the picking head,
FIG 3 shows in a simplified fashion the pick head grasping stationary pieces of material and that the second transport means has received yet further pieces of material after the start of the picking cycle without moving the pieces of material already in picking position,

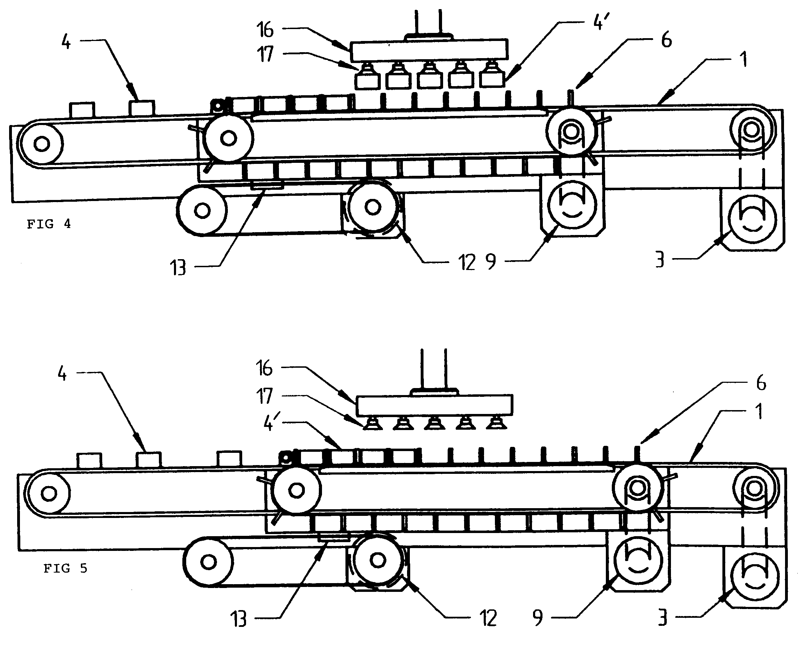

FIG 4 shows in a simplified fashion picked pieces of material as well as further received pieces of material in the second transport means without influencing the picking, and
FIG 5 shows in a simplified fashion a position during the return movement of the second transport means.

In the following an embodiment of the invention will be explained. It is however obvious to the skilled man that many other different embodiments than those described here are possible.

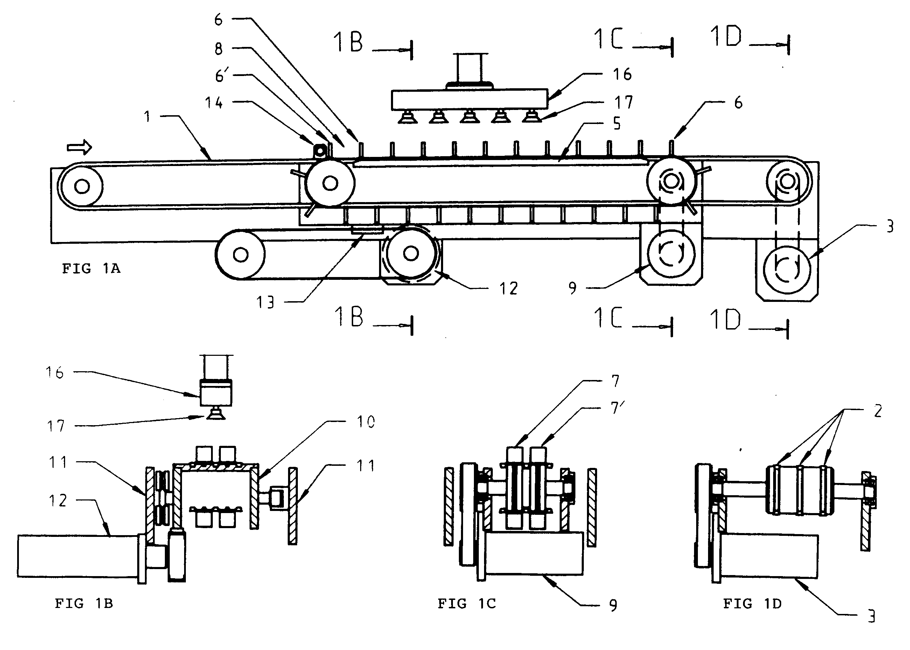

FIGS 1:A to 1:D show how a first transport means 1 comprises a conveyor which is designed with three narrow parallel bands 2, which run over common rollers and are driven by an electric motor 3. The band conveyor 1 runs continuously, with constant speed. On the band conveyor 1 pieces of material 4 are transported with relative positions randomly distributed. The band conveyor 1 connects downstream the transport direction (shown with an arrow) to a second transport means 5, consisting of a carrier conveyor. The carrier conveyor is so designed that carriers 6 are mounted on two parallel gearbelts 7, 7', and so constructed that the carriers form compartments 8, wherein the pieces of material 4 exactly fit. The carrier conveyor 5 is driven by an electric servo-motor 9. The carriers 7, 7' penetrate in the spaces created between the bands 2 in the first conveyor.

The carrier conveyor 5 has a framework 10 which is linearly moveably held in another framework 11 and has another electric servo-motor 12.

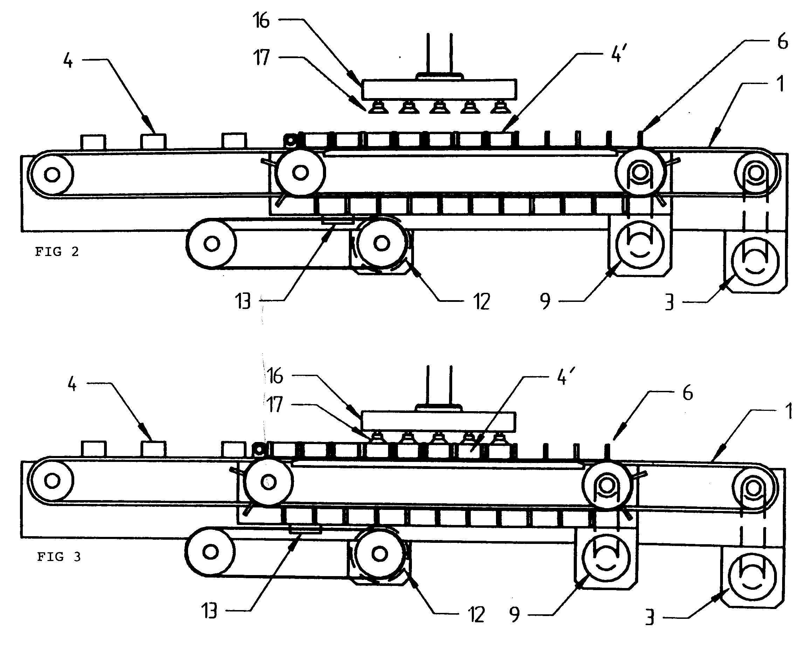

In the beginning of the work cycle the carrier conveyor 5 and its framework 10 are situated in the start position 13 (see FIG 1 A and FIG 2) with regard to the second framework 11.

When a piece of material 4 arrives to the transition between the band conveyor 1 and the carrier conveyor 5, a photocell 14 reads the position of the piece of material 4, whereby the servo-motor 9 via a control system drives the carrier conveyor 5 one step. Consequently the piece of material 4 is taken over to the carrier conveyor 5 and is positioned between two carriers 6, 6'.

When the next piece of material 4'', after an arbitrary time, however longer than the advancing or indexing time for the carrier conveyor, arrives to the transition between the conveyors 1, 5, the process is repeated.

When a predetermined number of pieces of material, for example five, is situated on the carrier conveyor 5, the control system will activate the servo-motor 12 over new pieces of material are transferred to the carrier conveyor, so that the motor 12 moves the frame 10 of the carrier conveyor against the transport direction. The two servo-motors 9, 12 are so controlled, that the position relative to the surroundings of the said five pieces of material on the carrier conveyor 5 remain unchanged in spite of that new pieces of material are taken over by the carrier conveyor.

When the fifth piece of material has been taken over by the carrrier conveyor 5 and the latter has reached its rest position a picking head 16 having five suction cups 17 is activated. This head descends and sucks on to the pieces of material in order to lift them from the carrier conveyor 5 and to move them to packages standing beside, and which have been positioned by another system not shown in this connection.

During the time needed for the picking head 16 to descend, suck on to and lift the pieces of material 4, the servo-motor 12 is running as previously described. Consequently the pieces of material are at rest in a carefully determined position during the time required by the picking head, irrespective of whether more pieces of material arrive and are taken over by the carrier conveyor or not during this time.

When the picking head 16 and the pieces of material 4 have reached beyond the movement area av the carriers, the control system controls the servo-motor 12 in such a way, that the body of the carrier conveyor re-assumes its original position 13.

Thereafter and when also the picking head has returned to its original position the cycle is complete.

## Claims

1. Method for positioning of pieces of material (4) in order to perform operations thereon, said pieces (4) being conveyed on a first continuously driven endless conveyor (1) with randomly distributed mutual distances with respect to the conveying direction, said pieces of material (4) being transferred to a second endless, independently driveable conveyor (5), **characterized** in that said first conveyor (1) completely overlaps said second conveyor (5), said second conveyor being provided with regularly spaced transport fingers (7, 7'), and being mounted on a reciprocatably movable carriage, said second conveyor (5) being operatable such that when reaching a predetermined positioning after performing a pre-set number of indexation steps,it is translated in its entirety against its own transport direction, during exactly the same time and with the same speed as that of its indexing movement, so that the pieces of material on this second conveyor (5) remain at a stationary position independently of whether a transport on said first conveyor (1) is performed or not, and in that during this controlled time interval a working head (16) is brought into engagement with the number of articles to perform an operation.

2. Method according to claim 1, **characterized** in that the operation is a machining process.

3. Method according to claim 1, **characterized** in that the operation is an assembly of a further part or parts on said pieces of material.

4. Method according to anyone of claims 1-3, **characterized** in that the operation includes a picking step.

5. Method according to claim 4, **characterized** in that the second conveyor (5) after said picking step returns to its return position, in which new pieces of material (4) are positioned for repeating the above mentioned operational steps.

6. Device for positioning pieces of material (4) which are arriving, and are transported on a first endless conveyor (1) with random mutual distances with respect to the conveying direction, said first conveyor (1) being arranged to transfer said pieces of material (4) onto a second endless transport conveyor (5), **characterized** in that said first conveyor (1) is completely overlapping said second conveyor (5) , said second conveyor carrying regularly spaced transport figures (7, 7'), said second conveyor being driven in intermittent indexed transport steps performed for the transfer of a preselected number of pieces of material (4) to a predetermined positioning, and being mounted on a reciprocatably movable carriage which is translatable against its own direction of transport, during the exact same time and with the same speed as its transport movement, where said preselected number of pieces of material arrive at a rest position independent of whether transport movement with the first conveyor (1) is performed or not, and in that during a controlled time interval a working head (16) is brought into engagement with the number of pieces of material, whereafter said carriage returns to its start position.

7. Device according to claim 6, **characterized** in that the head (16) has one or more shafts for performing several operations.

8. Device according to claim 7, **characterized** in that the head (16) is a picking type head arranged to move pieces of material from said second conveyor (5).

9. Device according to claim 6, **characterized** in that the head (16) is a multi operational performing head.

10. Device according to claim 7, **characterized** in that the head (16) is a cutting tool.

11. Device according to claim 7, **characterized** in that the head (16) is a soldering head.

12. Device according to claim 7, **characterized** in that the head (16) is a welding head.

13. Device according to claim 6, **characterized** in that the head (16) is an assembly head in order to assemble one or more parts on said pieces of material.

14. Device according to any one of claims 6-12, **characterized** in that said first conveyor (1) is a band conveyor.

15. Device according to any one of claims 6-12, **characterized** in that said first conveyor (1) is a chain conveyor.

16. Device according to any one of claims 6-12, **characterized** in that said first conveyor (1) includes several load carriers (2).

17. Device according to any one of claims 6-12, **characterized** in that said second conveyor (5) is a band conveyor.

18. Device according to any one of claims 14-16, **characterized** in that said second conveyor (5) is a chain conveyor.

19. Device according to any one of claims 14-16, **characterized** in that said second conveyor (5) includes several load carriers (8, 7').

20. Device according to any one of claims 17-19, **characterized** in that said second conveyor (5) is provided with carriers (6, 6').

21. Device according to any one of claims 17-19, **characterized** in that said second conveyor (5) has fixture appliances in order to keep said pieces of material fixed in relation to the moveable transport part of said second transport means.

22. Device according to any one of claims 6-19, **characterized** in that said second conveyor (5) is driven by two accurately controllable servo-motors (9, 12).

23. Device according to claim 19, **characterized** in that the head (16) is driven by an accurately controllable motor, or by a motor which is controlled by a control system common for the complete device.

## Patentansprüche

1. Verfahren zum Positionieren von Materialstücken (4) zwecks Ausführung Von Bearbeitungen an diesen, wobei die Stücke (4) auf einem ersten kontinuierlich angetriebenen, endlosen Fördermittel (1) mit zufällig verteilten gegenseitigen Abständen in Förderrichtung gefördert und auf ein zweites endloses, unabhängig antreibbares Fördermittel (5) übergeben werden,
**dadurch gekennzeichnet**, daß das erste Fördermittel (1) das zweite Fördermittel (5) vollständig überlappt, das zweite Fördermittel mit regelmäßig beabstandeten Förderfingern (7, 7') versehen und auf einem hin- und herbewegbaren Schlitten angeordnet ist, wobei das zweite Fördermittel (5) so betrieben werden kann, daß es nach Ausführung einer vorher eingestellten Anzahl von Schaltschritten bei Erreichen einer vorgegebenen Position genau während der gleichen Zeit und mit der gleichen Geschwindigkeit wie die Schaltbewegung in seiner Gesamtheit entgegen seiner eigenen Förderrichtung versetzt wird, so daß die Materialstücke
auf diesem zweiten Fördermittel (5) in einer stationären Position unabhängig davon verbleiben, ob eine Förderung auf dem ersten Fördermittel (1) stattfindet oder nicht, und daß während dieses gesteuerten Zeitintervalls ein Arbeitskopf (16) in Eingriff mit einer Anzahl von Artikeln gebracht wird, um einen Arbeitsvorgang vorzunehmen.

2. Verfahren nach Anspruch 1,
**dadurch gekennzeichnet**, daß der Arbeitsvorgang ein Bearbeitungsprozeß ist.

3. Verfahren nach Anspruch 1,
**dadurch gekennzeichnet**, daß der Arbeitsvorgang die Montage eines weiteren Teils oder weiterer Teile an den Materialstücken ist.

4. Verfahren nach einem der Ansprüche 1 bis 3,
**dadurch gekennzeichnet**, daß der Arbeitsvorgang einen Greifschritt beinhaltet.

5. Verfahren nach Anspruch 4,
**dadurch gekennzeichnet**, daß das zweite Fördermittel (5) nach dem Greifschritt in die Ausgangsstellung zurückkehrt, in der neue Materialstücke (4) zur Wiederholung der oben erwähnten Bearbeitungsschritte positioniert werden.

6. Vorrichtung zum Positionieren von Materialstücken (4), die auf einem ersten endlosen Fördermittel (1) ankommen und auf diesem mit zufällig verteilten gegenseitigen Abständen in Förderrichtung gefördert werden, wobei das erste Fördermittel (1) so ausgebildet ist, daß es die Materialstücke (4) auf ein zweites endloses Fördermittel (5) überträgt,
**dadurch gekennzeichnet**, daß das erste Fördermittel (1) das zweite Fördermittel (5) vollständig überlappt, daß das zweite
Fördermittel mit regelmäßig beabstandeten Förderfingern (7, 7') versehen und für die Übertragung einer vorgewählten Anzahl von Materialstücken (4) in intermittierenden Schalt-Förderschritten zu einer vorgegebenen Positionierung angetrieben wird und auf einem hin- und herbewegbaren Schlitten angeordnet ist, der genau während der gleichen Zeit und mit der gleichen Geschwindigkeit wie seine Förderbewegung entgegen seiner eigenen Förderrichtung versetzt werden kann, wobei die vorgewählte Anzahl von Materialstücken in einer Ruheposition unabhängig davon ankommen, ob eine Förderung auf dem ersten Fördermittel (1) stattfindet oder nicht, und daß während dieses gesteuerten Zeitintervalls ein Arbeitskopf (16) in Eingriff mit der Anzahl von Materialstücken gebracht wird, wonach der Schlitten in seine Anfangsposition zurückkehrt.

7. Vorrichtung nach Anspruch 6,
**dadurch gekennzeichnet**, daß der Kopf (16) eine oder mehrere Wellen zur Durchführung von mehreren Arbeitsvorgängen aufweist.

8. Vorrichtung nach Anspruch 7,
**dadurch gekennzeichnet**, daß der Kopf (16) ein Greifkopf ist, der zum Bewegen von Materialstücken vom zweiten Fördermittel (5) ausgebildet ist.

9. Vorrichtung nach Anspruch 6,
**dadurch gekennzeichnet**, daß der Kopf (16) ein Mehrfachfunktionen ausführender Kopf ist.

10. Vorrichtung nach Anspruch 7,
**dadurch gekennzeichnet**, daß der Kopf (16) ein Schneidwerkzeug ist.

11. Vorrichtung nach Anspruch 7,
**dadurch gekennzeichnet**, daß der Kopf (16) ein Lötkopf ist.

12. Vorrichtung nach Anspruch 7,
**dadurch gekennzeichnet**, daß der Kopf (16) ein Schweißkopf ist.

13. Vorrichtung nach Anspruch 6,
**dadurch gekennzeichnet**, daß der Kopf (16) ein Montagekopf zur Montage eines oder mehrerer Teile an den Materialstücken ist.

14. Vorrichtung nach einem der Ansprüche 6 bis 12,
**dadurch gekennzeichnet**, daß das erste Fördermittel (1) ein Bandförderer ist.

15. Vorrichtung nach einem der Ansprüche 6 bis 12,
**dadurch gekennzeichnet**, daß das erste Fördermittel (1) ein Kettenförderer ist.

16. Vorrichtung nach einem der Ansprüche 6 bis 12,
**dadurch gekennzeichnet**, daß das erste Fördermittel (1) mehrere Lastträger (2) aufweist.

17. Vorrichtung nach einem der Ansprüche 6 bis 12,
**dadurch gekennzeichnet**, daß das zweite Fördermittel (5) ein Bandförderer ist.

18. Vorrichtung nach einem der Ansprüche 14 bis 16,
**dadurch gekennzeichnet**, daß das zweite Fördermittel (5) ein Kettenförderer ist.

19. Vorrichtung nach einem der Ansprüche 14 bis 16,
**dadurch gekennzeichnet**, daß das zweite Fördermittel (5) mehrere Lastträger (8, 7') aufweist.

20. Vorrichtung nach einem der Ansprüche 17 bis 19,
**dadurch gekennzeichnet**, daß das zweite Fördermittel (5) mit Trägern (6, 6') versehen ist.

21. Vorrichtung nach einem der Ansprüche 17 bis 19,
**dadurch gekennzeichnet**, daß das zweite Fördermittel (5) mit Befestigungsmitteln versehen ist, um die Materialstücke relativ zu dem beweglichen Förderteil des zweiten Fördermittels in Position zu halten.

22. Vorrichtung nach einem der Ansprüche 6 bis 19,
**dadurch gekennzeichnet**, daß das zweite Fördermittel (5) von zwei genau steuerbaren Servomotoren (9, 12) angetrieben wird.

23. Vorrichtung nach Anspruch 19,
**dadurch gekennzeichnet**, daß der Kopf (16) von einem genau steuerbaren Motor oder von einem Motor angetrieben wird, der von einer für die gesamte Vorrichtung gemeinsamen Steuerung gesteuert wird.

## Revendications

1. Procédé de positionnement de pièces de matière (4) afin de leur appliquer des opérations, lesdites pièces (4) étant acheminées sur un premier convoyeur sans fin (1) entraîné de façon continue avec des distances mutuelles réparties de façon aléatoire par rapport à la direction d'acheminement desdites pièces de matière (4) qui sont transférées vers un second convoyeur sans fin (5) pouvant être entraîné indépendamment, caractérisé en ce que ledit premier convoyeur (1) recouvre complètement ledit second convoyeur (5), ledit second convoyeur est pourvu de doigts (7, 7') de transport espacés régulièrement et étant montés sur un chariot animé d'un mouvement de va-et-vient, ledit second convoyeur (5) pouvant fonctionner de façon que, lorsqu'il atteint une position prédéterminée après avoir effectué un nombre prédéterminé de pas d'indexation, il est translaté dans sa totalité contre son propre sens de transport, pendant exactement la même durée et avec la même vitesse que celles de son déplacement d'indexage, de façon que les pièces de matière se trouvant sur ce second convoyeur (5) restent à une position stationnaire indépendamment du fait que l'on effectue, ou non, un transport sur ledit premier convoyeur (1), et en ce que, pendant cet intervalle de temps commandé, une tête de travail (16) est amenée en contact avec le nombre d'articles pour appliquer une opération.

2. Procédé selon la revendication 1,
caractérisé en ce que l'opération est un traitement d'usinage.

3. Procédé selon la revendication 1,
caractérisé en ce que l'opération est un assemblage d'une partie, ou de parties, supplémentaires, sur lesdites pièces de matière.

4. Procédé selon l'une quelconque des revendications 1 à 3, caractérisé en ce que l'opération comprend une étape de saisie.

5. Procédé selon la revendication 4, caractérisé en ce que, après ladite étape de saisie, le second convoyeur (5) retourne vers sa position de retour, dans laquelle de nouvelles pièces de matière (4) sont positionnées pour répéter les étapes d'opérations mentionnées ci-dessus.

6. Dispositif de positionnement de pièces de matière (4) qui arrivent et qui sont transportées sur un premier convoyeur sans fin (1), des distances mutuelles aléatoires par rapport à la direction d'acheminement dudit premier convoyeur (1) étant agencées pour transférer lesdites pièces de matière (4) sur un second convoyeur sans fin (5) de transport, caractérisé en ce que ledit premier convoyeur (1) recouvre complètement ledit second convoyeur (5), en ce que ledit second convoyeur portant des doigts (7, 7') de transport espacées régulièrement, et ledit second convoyeur étant entraîné suivant des pas de transport indexés intermittents effectués pour le transfert, vers un positionnement prédéterminé, d'un nombre préchoisi de pièces de matière (4) étant montées sur un chariot animé d'un mouvement de va-et-vient qui peut translater contre son propre sens de transport, pendant exactement la même durée et avec la même vitesse que celles de son déplacement de transport, où ledit nombre préchoisi de pièces de matière arrive à une position de repos indépendamment du fait que l'on effectue, ou non, un déplacement de transport avec le premier convoyeur (1), et en ce que, pendant un intervalle de temps commandé, une tête (16) de travail est amenée en contact avec le nombre de pièces de matière, après quoi ledit chariot retourne vers sa position de départ.

7. Dispositif selon la revendication 6, caractérisé en ce que la tête (16) comporte un ou plusieurs arbres destinés à effectuer plusieurs opérations.

8. Dispositif selon la revendication 7, caractérisé en ce que la tête (16) est une tête de type de saisie agencée pour déplacer des pièces de matière depuis ledit second convoyeur (5).

9. Dispositif selon la revendication 6, caractérisé en ce que la tête (16) est une tête effectuant plusieurs opérations.

10. Dispositif selon la revendication 7, caractérisé en ce que la tête (16) est un outil de coupe.

11. Dispositif selon la revendication 7, caractérisé en ce que la tête (16) est une tête de brasage.

12. Dispositif selon la revendication 7, caractérisé en ce que la tête (16) est une tête de soudage.

13. Dispositif selon la revendication 6, caractérisé en ce que la tête (16) est une tête d'assemblage afin d'assembler une ou plusieurs parties sur lesdites pièces de matière.

14. Dispositif selon l'une quelconque des revendications 6 à 12, caractérisé en ce que ledit premier convoyeur (1) est un convoyeur à bande.

15. Dispositif selon l'une quelconque des revendications 6 à 12, caractérisé en ce que ledit premier convoyeur (1) est un convoyeur à chaîne.

16. Dispositif selon l'une quelconque des revendications 6 à 12, caractérisé en ce que ledit premier convoyeur (1) comprend plusieurs porte-charges (2).

17. Dispositif selon l'une quelconque des revendications 6 à 12, caractérisé en ce que ledit second convoyeur (5) est un convoyeur à bande.

18. Dispositif selon l'une quelconque des revendications 14 à 16, caractérisé en ce que ledit second convoyeur (5) est un convoyeur à chaîne.

19. Dispositif selon l'une quelconque des revendications 14 à 16, caractérisé en ce que ledit second convoyeur (5) comprend plusieurs porte-charges (8, 7').

20. Dispositif selon l'une quelconque des revendications 17 à 19, caractérisé en ce que ledit second convoyeur (5) est pourvu de supports (6, 6').

21. Dispositif selon l'une quelconque des revendications 17 à 19, caractérisé en ce que ledit second convoyeur (5) comporte des dispositifs de serrage destinés à maintenir lesdites pièces de matière dans une relation fixe par rapport à la partie de transport mobile dudit second moyen de transport.

22. Dispositif selon l'une quelconque des revendications 6 à 19, caractérisé en ce que ledit second convoyeur (5) est entraîné par deux servomoteurs (9, 12) pouvant être commandés de manière précise.

23. Dispositif selon la revendication 19, caractérisé en ce que la tête (16) est entraînée par un moteur pouvant être commandé de manière précise, ou par un moteur qui est commandé par un système de commande commun à l'ensemble du dispositif.
